# EUROPÄISCHE PATENTANMELDUNG

(11) **EP 2 607 301 A1**
(43) Veröffentlichungstag der Anmeldung: **26.06.2013**
(21) Anmeldenummer: 11194439.3
(22) Anmeldetag: 20.12.2011
(51) Int. Cl.: C01B 3/38, B01J 8/02, B01J 8/06, B01J 8/18, C01B 3/44, B01J 8/00

(54) **Vorrichtung und Verfahren zur Erdgasreformierung**

(71) Anmelder: Tetzlaff, Karl-Heinz, 65779 Kelkheim (DE)
(72) Erfinder: Tetzlaff, Karl-Heinz, 65779 Kelkheim (DE)
(74) Vertreter: Cohausz & Florack

(57) **Zusammenfassung**

Dargestellt und beschrieben ist eine Vorrichtung zur katalytischen Umsetzung von gasförmigen Kohlenwasserstoffen zu Synthesegas mit Hilfe von Sauerstoff. Um die Vorrichtung zu verbessern, ist vorgesehen, dass der Gas und Katalysatorpartikel enthaltene Katalysatorraum (6, 6a, 6b, 6c) durch eine gasdurchlässige Wand (11) von dem Sauerstoff enthaltenen Sauerstoffraum (4a) getrennt ist.

## Beschreibung

Die Erfindung betrifft ein katalytisches Verfahren zur Herstellung von Synthesegas aus gasförmigen Kohlenwasserstoffen, insbesondere Erdgas, mit Hilfe sauerstoffhaltiger Gase, wobei der den Katalysator enthaltende Raum von dem Sauerstoff enthaltenden Raum durch eine gasdurchlässige Wand getrennt ist. Ferner betrifft die Erfindung eine Vorrichtung zur Durchführung des Verfahrens.

### Stand der Technik

Reformer zur katalytischen Reformierung von Erdgas sowie entsprechende Verfahren sind bereits seit langem bekannt. Es sind dabei insbesondere großtechnische Reformer und Reformer zur dezentralen Bereitstellung von kleinen Mengen an Synthesegas, insbesondere zum Betrieb von dezentralen Brennstoffzellen, zu unterscheiden. Letztere stellen keine großtechnischen Anlagen dar. Es handelt sich stattdessen um kleine kompakte Anlagen, die teilweise mobil sind. Daher und weil diese zusammen mit kostenintensiven Geräten, wie Brennstoffzellen, betrieben werden, die hohe Anforderungen an die Reinheit des produzierten Synthesegases stellen, kommen für solche Reformer teilweise recht aufwendige Konstruktionen in Frage.

Bei großtechnischen Reformern, die beispielsweise mehr als 100 m³ Synthesegas pro Stunde produzieren, kommen wegen der Anlagengröße und des sehr hohen Durchsatzes, nicht zuletzt aus Kostengründen, nur einfache und damit kostengünstig herzustellende und zu betreibende Anlagen in Frage. Die vorliegende Erfindung betrifft daher insbesondere großtechnische Reformer.

Allotherme Reformer zur Reformierung von gasförmigen Kohlenwasserstoffen im großtechnischen Maßstab weisen typischerweise ein Festbett aus Katalysatorpellets auf, das von den Kohlenwasserstoffen und Wasserdampf durchströmt wird. Der Wasserdampf und die Kohlenwasserstoffe reagieren an den Katalysatorpellets miteinander unter Bildung von Synthesegas. Die allotherme Reformierung von gasförmigen Kohlenwasserstoffen stellt einen endothermen Prozess dar, dem Wärme zugeführt werden muss. Die Beheizung der rohrförmigen Katalysatorräume erfolgt von außen durch luftbetriebene Gasbrenner, wobei der Wärmeaustausch der Rauchgase über die Wandungen der Rohre an die ruhenden Katalysatorpartikel in den Rohren erfolgt. Die Rohre von typisch 100 mm Durchmesser sind für einen Innendruck von 25 bar bis 50 bar ausgelegt. Der schlechte Wärmeübergang außen und innen führt zu großen Reaktionsräumen. Das ist ein erheblicher Nachteil. Bedingt durch die hohen Temperaturen an den Brennern, entstehen zudem große Mengen an Luftschadstoffen.

Eine autothermer Umsetzung von gasförmigen Kohlenwasserstoffen mit reinem Sauerstoff erfolgt üblicherweise an katalysatorbeschichteten keramischen Wabenkörpern. Die Umsetzung erfolgt hier sehr schnell, was zu kaum beherrschbaren Temperaturen führt, die von billigen nickelbasierten Katalysatoren nicht ertragen werden.

### Aufgabe der Erfindung

Der Erfindung liegt daher die Aufgabe zugrunde, ein Verfahren und eine Vorrichtung der jeweils genannten Art derart weiter zu entwickeln und auszugestalten, dass die geschilderten Nachteile vermieden werden.

Die Aufgabe wird mit einer allotherm und autotherm betreibbaren brennerlosen Vorrichtung und einem Verfahren gemäß Oberbegriff der Ansprüche 1 und 12 gelöst. Die Ansprüche 2 bis 11 und 3 bis 17 betreffen weitere vorteilhafte Ausgestaltungen der Erfindung.

### Beschreibung

Die Dampfreformierung von Erdgas zu Synthesegas ist ein endothermer Prozess. In dem erfindungsgemäßen Verfahren wird die endotherme Energie durch Teiloxidation des Brenngases mit Sauerstoff durchgeführt. Als Brenngas sind Erdgas, Synthesegas oder Zwischenstufen zu verstehen, die bei dem Prozess entstehen. Mit Sauerstoff sind auch sauerstoffhaltige Gase wie Luft gemeint.

Die erfindungsgemäße Vorrichtung besteht aus einem Reaktor, der durch gasdurchlässige Wände in einen Sauerstoffraum und einen Katalysatorraum geteilt ist. Die gasdurchlässigen Wände sind vorzugsweise als Rohre ausgebildet Nun kann man die Druckdifferenz so einstellen, dass das Brenngas in den Sauerstoffraum einströmt und unmittelbar an den Rohren verbrennt. Man erhält so einen allothermen Prozess.

Stellt man die Druckdifferenz so ein, dass der Sauerstoff in den Katalysatorraum einströmt, wird das Brenngas unmittelbar an den Rohren mindestens teilweise oxidiert. Man erhält so einen autothermen Prozess mit erhöhtem CO2-Gehalt im Synthesegas.

Es sind alle Arten von gasdurchlässigen Rohren nutzbar, die dem üblichen Temperaturen von 500°C bis 1100°C standhalten, also Metallrohre mit kleinen Löchern, aus Blechscheiben geformte Rohre mit Innenstützen, Sinterrohre aus Metall oder Keramik und Faserstoffrohre. Keramikrohre sollten wegen der Bruchgefahr vorzugsweise aus kurzen Zylinderabschnitten aufgebaut sein, die mit einer Metallstruktur von innen zentriert und vorgespannt werden. Die Öffnungen und Poren sollten kleiner sein als die Katalysatorpartikel. Vorteilhaft ist eine Struktur mit großem Porenraum an der Rohrwand an der Sauerstoff und Brenngas aufeinandertreffen und eine weniger gasdurchlässige Struktur an der anderen Seite der Rohrwand. Eine derartige Struktur kann auch durch konzentrische Rohre geschaffen werden. Die weniger gasdurchlässige Struktur dient in erster Linie der Gasdosierung durch einen Differenzdruck, eine gröbere Struktur mit hohem Porenanteil dient der besseren Oxidation und der besseren Wärmeübertragung auf das Rohr.

Keramikrohre weisen eine hohe Druckfestigkeit auf. Daher sollten diese Rohre vorzugsweise außen mit einem höheren Druck belastet werden und nicht innen. Vorteilhaft in diesem Sinne sind Rohre mit kleinem Durchmesser.

Die Oxidation findet unmittelbar an oder in der Rohrwand statt. Wegen der kurzen Distanz der Oxidationszone zur Rohrwand wird die Wärme direkt durch Wärmeleitung übertragen. Der Wärmeeintrag ist darum um Größenordnungen höher als die Wärmeübertragung von heißen Rauchgasen auf eine Rohrwand. Das erfindungsgemäße Verfahren wirkt also so, als würde man die Rohre direkt elektrisch beheizen. Damit kann der gute Wärmeübergand von einer Wirbelschicht auf ein Rohr voll genutzt werden, was eine sehr hohe Leistungsdichte im Reaktor zur Folge hat.

Der Katalysatorraum kann sowohl in den Rohren als auch um die Rohre angeordnet sein. Gasgeschwindigkeit und Größe der Katalysatorpartikel kann so gewählt werden, dass die Katalysatorpartikel ein Festbett, eine stationäre Wirbelschicht oder teilweise überwiegend in Schwebe gehalten werden. Dabei ist es besonders vorteilhaft, wenn die Katalysatorpartikel am oberen Ende des Katalysatorraumes durch eine Trennvorrichtung abgeschieden werden und in den Katalysatorraum zurückfließen.

Durch die Trennvorrichtung kann der Raum zwischen der Oberseite der Wirbelschicht und dem Ausgang kleiner ausgeführt werden, weil überspritzende Katalysatorpartikel von der Trennvorrichtung abgeschieden und zurück befördert werden.

Die Trennvorrichtung kann aus Vorrichtungen bestehen, die die Schwerkraft nutzen, die Fliehkraft nutzen oder als Filter arbeiten. Trennvorrichtungen, die mit der Schwerkraft arbeiten sind beispielsweise Lamellenabscheider, die aus Blechen geformt sind und schräge Kanäle ausbilden, die zur Senkrechten geneigt sind. Die Bleche haben vorzugsweise eine Wellblech- oder Wabenstruktur, damit die Katalysatorpartikel in den Rillen leichter in den Katalysatorraum zurück fließen können. Die Lamellenabscheider können auch aus Keramik geformt sein, wie das bei Abgas- oder Rauchgaskatalysatoren üblich sind. Lamellenabscheider sind wegen ihrer geringen Bauhöhe und der schonenden Abscheidung besonders geeignet. Mit Lamellenabscheidern ist auch eine schonende Klassierung möglich. So können Kohlenstoffpartikel und Ruß, die sich im Prozess bilden können, die Lamellenabscheider passieren, während die größeren und schwereren Katalysatorpartikel in den Katalysatorraum zurückgeführt werden. Daher sind Schwerkraft-Lamellenabscheider besonders bevorzugt. Als Fliehkraftabscheider sind ebenfalls Lamellen bekannt. Diese haben eine gekrümmte Form und werden vorzugsweise Waagerecht durchströmt. Die gekrümmte Form sorgt dafür, dass die Katalysatorpartikel sich an den Wänden sammeln und so abgeschieden werden.

Eine beliebte Art von Fliehkraftabscheidern sind Zyklone. Diese können sowohl innerhalb als auch Außerhalb des Reaktors angeordnet sein.

Eine andere sehr wirksame Art einer Trennvorrichtung sind Filterelemente, beispielsweise Kerzenfilter. Durch Schütteln oder durch kurze Druckstöße von der Reingasseite können die Katalysatorpartikel wieder in den Katalysatorraum zurückgefördert werden.

Die erfindungsgemäße Vorrichtung eignet sich nicht nur für den Reformer, der bei einer typischen Temperatur von 850°C betrieben wird, sondern auch für den Vorreformer, der bei deutlich tieferen Temperaturen betrieben wird.

### Beispiele

Die Erfindung wird anhand der Figuren 1 bis 14 beispielsweise beschrieben.
Fig. 1 zeigt einen allothermen Reaktor mit einer stationären Wirbelschicht.
Fig. 2 zeigt einen allothermen Reaktor mit einer stationären Wirbelschicht und einer Trennvorrichtung.
Fig.3 zeigt einen allothermen Reaktor mit einer zirkulierenden Wirbelschicht und einer Trennvorrichtung.
Fig. 4 zeigt einen Lamellenabscheider von der Seite.
Fig. 5 und Fig. 6 zeigen Lamellenabscheider im Querschnitt.
Fig. 7 zeigt einen autothermen Reaktor mit einer stationären Wirbelschicht.
Fig. 8 zeigt einen autothermen Reaktor mit einer stationären Wirbelschicht und einer Trennvorrichtung.
Fig. 9 zeigt einen autothermen Reaktor mit einer stark fluidisierten Wirbelschicht und einer Trennvorrichtung.
Fig. 10 zeigt einen allothermen Reaktor mit einem Festbett.
Fig. 11 zeigt den Ausschnitt eines Festbetts im Rohr in allothermer Betriebsweise.
Fig. 12 zeigt ein mehrlagiges poröses Rohr mit feinen Poren innen und groben Poren außen.
Fig. 13 zeigt ein Detail von Fig. 12.
Fig. 14 zeigt eine Anordnung von porösen Rohren mit außenliegendem Sauerstoffraum.
Fig. 15 zeigt einen Rohrquerschnitt, bei dem die Oberfläche der Rohrwand durch eine Rippenstruktur im Sauerstoffraum vergrößert ist.
Fig. 16 zeigt einen Rohrquerschnitt, bei dem die Oberfläche der Rohrwand zu Sauerstoffraum durch erhöhte Porosität vergrößert ist.
Fig. 17 eine Anordnung von porösen Rohren mit innenliegendem Sauerstoffraum.

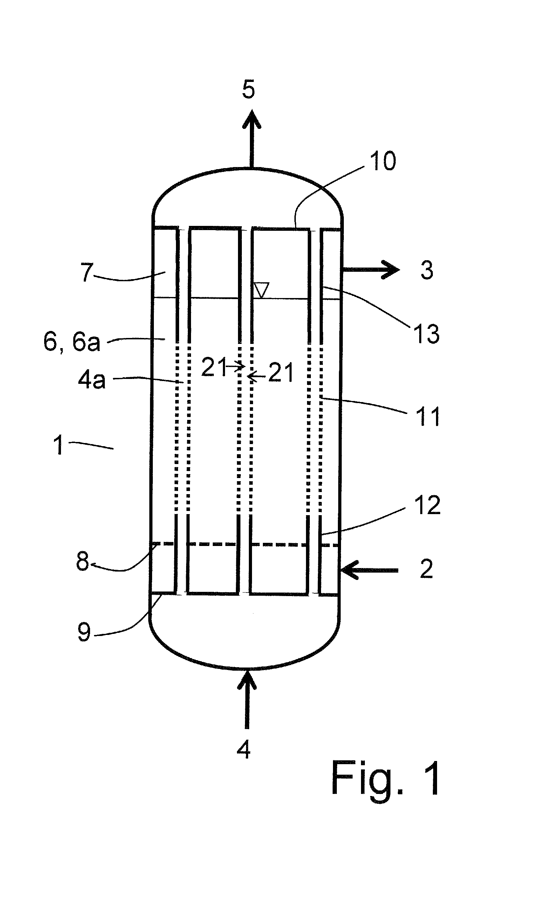

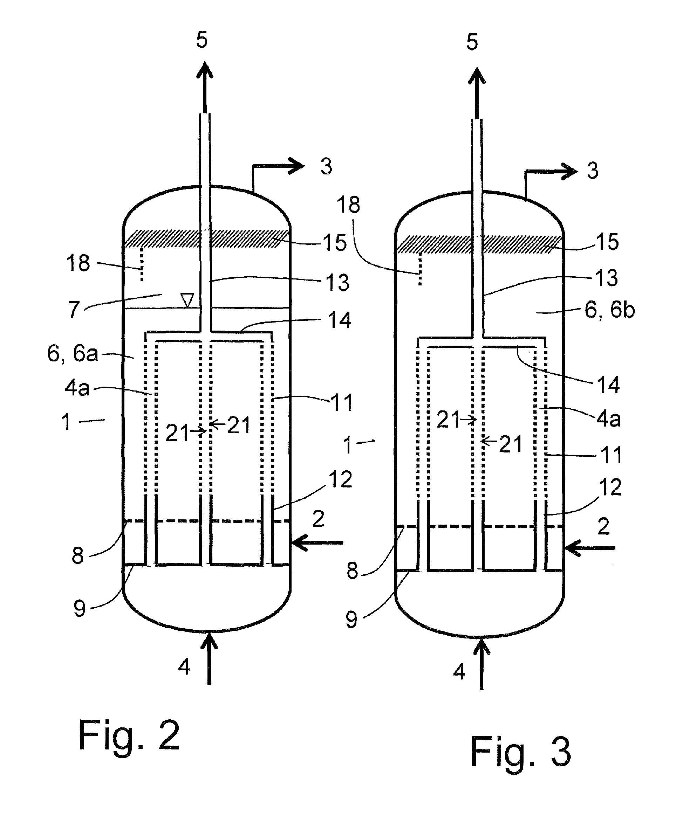

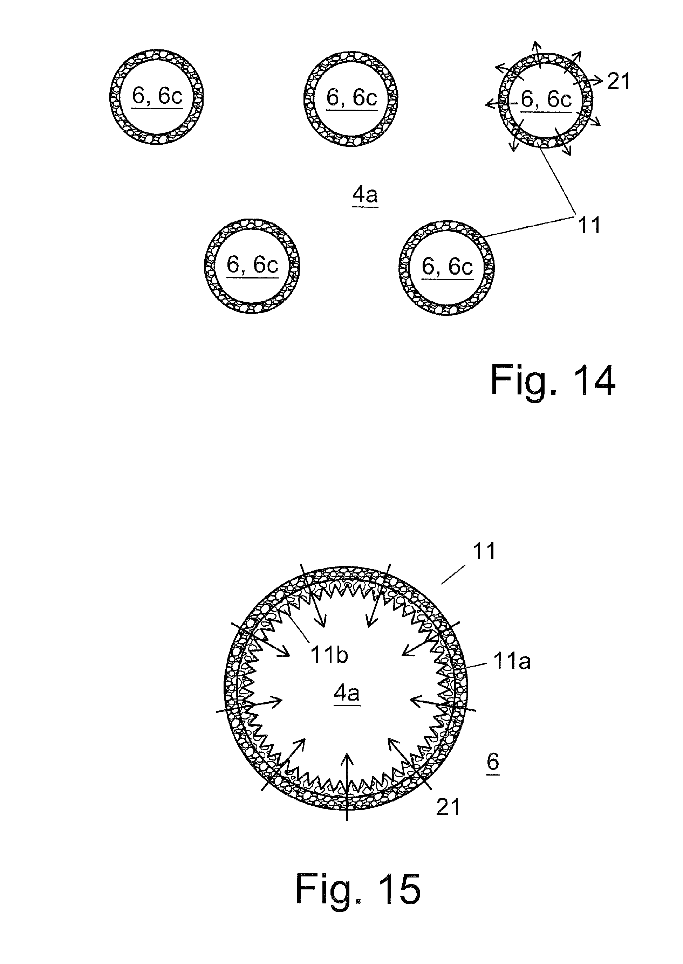

Fig. 1 zeigt einen allothermen Reaktor 1 bei dem der Katalysatorraum 6 als stationäre Wirbelschicht 6a ausgebildet ist. Der Reaktor 1 weist ferner einen Gasraum 7 oberhalb der Wirbelschicht auf. Im Katalysatorraum 6 ist eine Vielzahl von porösen Rohren 11 angeordnet, die den Sauerstoffraum 4a ausbilden. Der Sauerstoff 4 gelangt über den Rohrboden 9 in die porösen Rohre 11 und verlässt den Reaktor 1 über den Rohrboden 10 als Rauchgas 5, das im Wesentlichen aus CO2, 02, H2O und gegebenenfalls N2 besteht. Die Rohrzuführungen 12 und 13 außerhalb der Wirbelschicht 6a sind nicht porös. Die Verbindung zu den porösen Rohren 11 kann als Steckverbindung mit Labyrinthdichtung ausgeführt werden, da es auf eine absolute Dichtheit nicht ankommt. Das zu reformierende Rohgas 2 wird zwischen dem Rohrboden 9 und dem Düsenboden 8 eingeführt und verlässt den Reaktor 1 als Synthesegas 3. Die Druckdifferenz zwischen dem Katalysatorraum 6 und dem Sauerstoffraum 4a wird nun so eingestellt, dass ein Teil des Brenngases 21 in den Sauerstoffraum 4a strömt, und zwar gerade so viel, dass die Energie für diesen endothermen Prozess gedeckt wird. Das Brenngas 21 entspricht in einer Wirbelschicht weitgehend dem Synthesegas 3 am Ausgang des Reaktors 1. Weitere Details zu den porösen Rohren 11 werden weiter hinten anhand der Figuren 15 bis 17 beschrieben. Fig. 2 entspricht weitgehend der Fig. 1. Statt eines Rohrbodens werden die porösen Rohre 1 hier aber durch Sammelrohre 14 zusammengeführt. Das Rauchgas 5 wird über die Leitung 13 abgeführt. Als neues Element ist über der stationären Wirbelschicht 6a eine Trennvorrichtung 15 in Form von Lamellen angeordnet. Eventuell ausgetragene Katalysatorpartikel werden von der Trennvorrichtung 15 zurück in den Freiraum 7 gefördert. Das ist symbolisch durch herabfallende Katalysatorpartikel 18 angedeutet. Fig. 3 entspricht weitgehend der Fig. 2. Der Unterschied besteht hier darin, dass die Katalysatorpartikel 18 so klein, und die Fluidisierungsgeschwindigkeit so hoch ist, dass sich keine erkennbare Obergrenze der Wirbelschicht ausbildet. Die Katalysatorpartikel 18 werden dabei teilweise in Schwebe gehalten und überschießende Katalysatotpartikel 18 durch die Trennvorrichtung 15 abgeschieden und in den Reaktor 1 zurückgeführt. Die kleinen Katalysatorpartikel 18 werden aufgrund ihres kleinen Impulses nur wenig mechanisch beansprucht. Auf die übliche keramische Schutzhülle um die Katalysatorpartikel 18 kann deshalb verzichtet werden. Dadurch und durch die geringen Abmessungen, sind die Diffusionswege zu den aktiven Zentren des Katalysators sehr kurz. Das reduziert die erforderliche Menge des Katalysators erheblich.

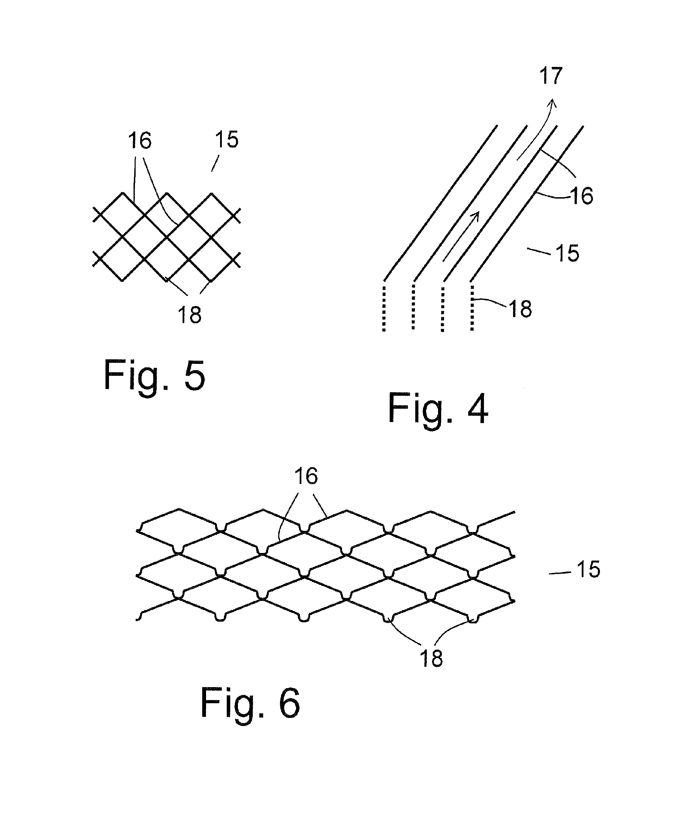

In Fig. 4 bis 6 sind Details einer Trennvorrichtung 15 dargestellt. Die Trennvorrichtung 15 ist hier als Lamellenabscheider ausgebildet, bei denen die Katalysatorpartikel 18 durch Schwerkraft abgeschieden werden.

Fig. 4 zeigt einen vertikalen Schnitt durch einen solchen Lamellenabscheider. Er besteht aus einer Vielzahl schräg gestellter Bleche 16. Wie die Pfeile 17 andeuten, strömt das Synthesegas 3 durch diese engen Kanäle. Mitgerissene Katalysatorpartikel 18 sinken dabei zu Boden und rutschen wieder in den Reaktor 1 zurück. Fig. 5 und Fig. 6 zeigt eine Ansicht in Richtung der Kanalachse eines Lamellenabscheiders. Es ist besonders vorteilhaft, die Bleche 16 so zu formen, dass die Katalysatorpartikel 18 sich in Rillen 18 sammeln können, wo die Strömungsgeschwindigkeit des Gases kleiner ist als in der Mitte und daher der Rücktransport der Katalysatorpartikel 18 erleichtert wird.

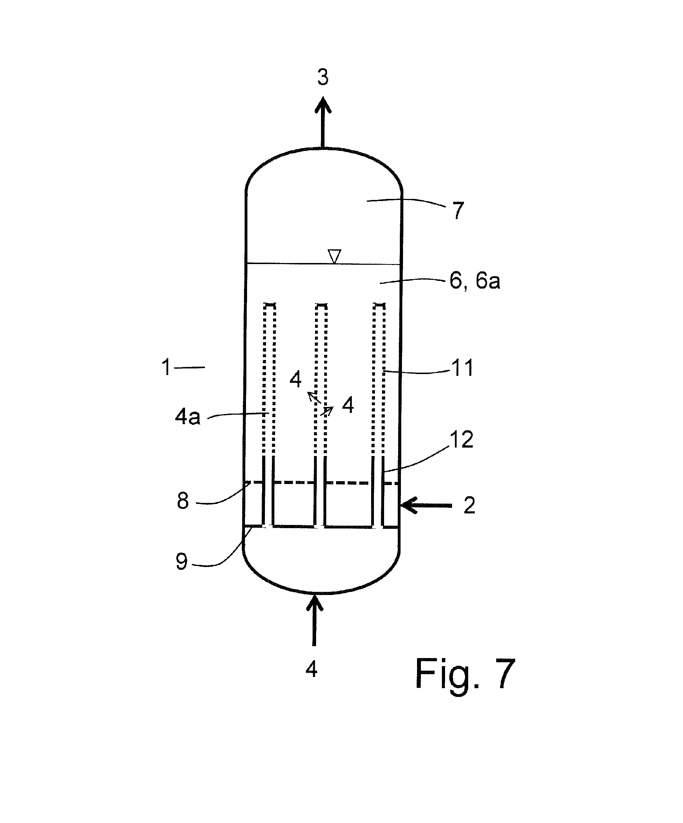

Fig. 7 zeigt einen autothermen Reaktor 1, der ähnlich aufgebaut ist wie der Reaktor 1 in Fig. 1. Der Unterschied besteht darin, dass die Druckdifferenz zwischen dem Sauerstoffraum 4a und dem Katalysatorraum 6 so gewählt wird, dass der Sauerstoff 4 in den Katalysatorraum 6 einströmt. Der Katalysatorraum 6 ist hier als stationäre Wirbelschicht 6a ausgebildet. Die Oxidation der Brenngase 21 erfolgt unmittelbar an der Außenwand der porösen Rohre 11. Das Brenngas 21 entspricht in einer Wirbelschicht weitgehend dem Synthesegas 3. Durch die große Oberfläche der porösen Rohre 11 und die hohen Turbulenzen in Wirbelschichtreaktoren ist sichergestellt, dass sich die Katalysatorpartikel 18 nicht überhitzen.

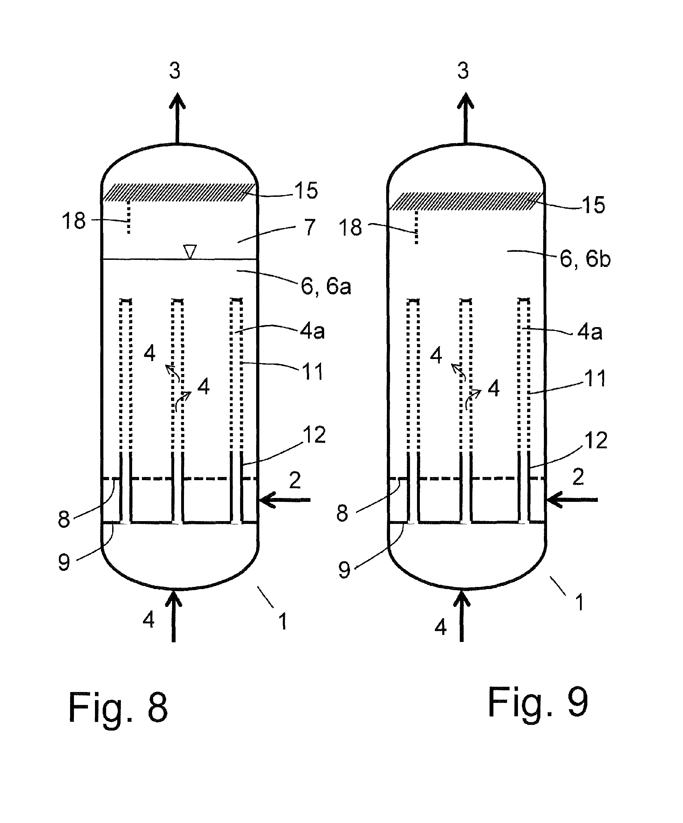

Die Figuren 8 und 9 zeigen autotherme Reaktoren 1 mit stationärer Wirbelschicht 6a und mit einer stark fluidisierten Wirbelschicht 6b bei der die Katalysatorpartikel mindestens teilweise in Schwebe gehalten werden. Wie bei Fig. 7 strömt auch hier der Sauerstoff 4 vom Sauerstoffraum 4a in den Katalysatorraum 6. Wie bei den Figuren 2 und 3 sind in Fig. 8 und 9 im oberen Teil des Reaktors 1 Trennvorrichtungen 15 angeordnet.

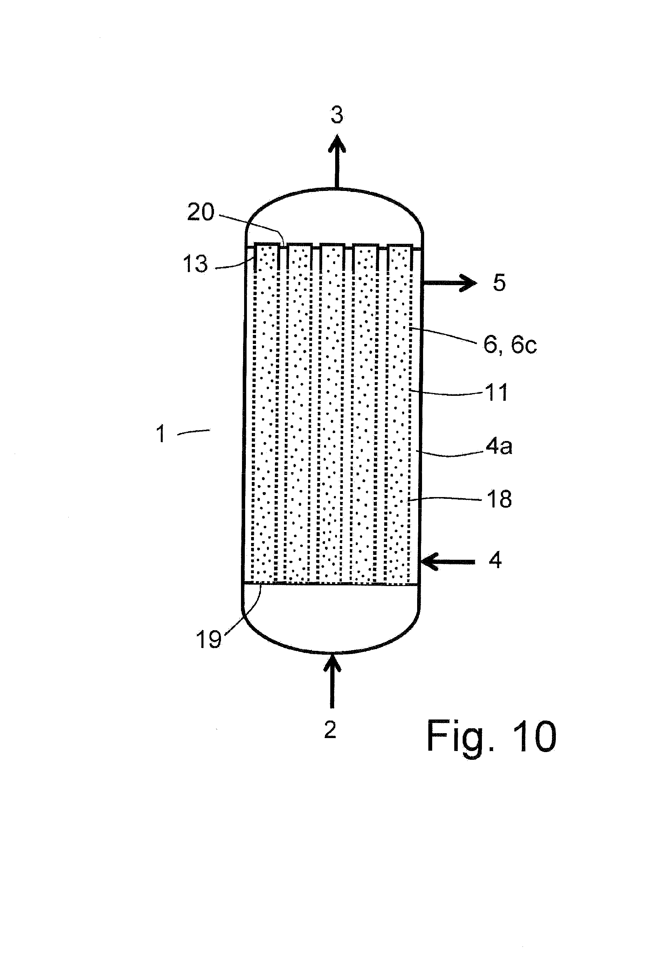

Fig. 10 zeigt einen allothermen Reaktor 1, bei dem der Katalysatorraum 6 als Festbett 6c ausgebildet ist. Die Katalysatorpartikel 18 befinden sich hier im Katalysatorraum 6 in den porösen Rohren 11. Der Sauerstoffraum 4a ist um die Rohre angeordnet. Die Druckdifferenz wird hier so eingestellt, dass das Brenngas 21 aus dem Katalysatorraum 6 in den Sauerstoffraum 4a strömt. Die Porösen Rohre 11 werden am Rohrboden 19 durch ein Sieb am Herausfallen gehindert. Am Oberen Ende sind die porösen Rohre von einem gasundurchlässigen Kopfrohr 13 eingefasst, das in der Kopfplatte 20 befestigt ist. Das Rohgas 2 strömt von unten in den Reaktor 1 ein und verlässt den Reaktor 1 als Synthesegas 3. Sauerstoff 4 wird in den Sauerstoffraum 4a eingeleitet und verlässt den Reaktor 1 als Rauchgas 5. Die Stärke des Energieeintrages im Verlauf der Längsachse kann durch einen unterschiedlichen Gaswiderstand der porösen Rohre 11 entlang ihrer Achse eingestellt werden. Diesen Vorteil hat man bei der Beheizung massiver Rohre mit Rauchgasen nicht.

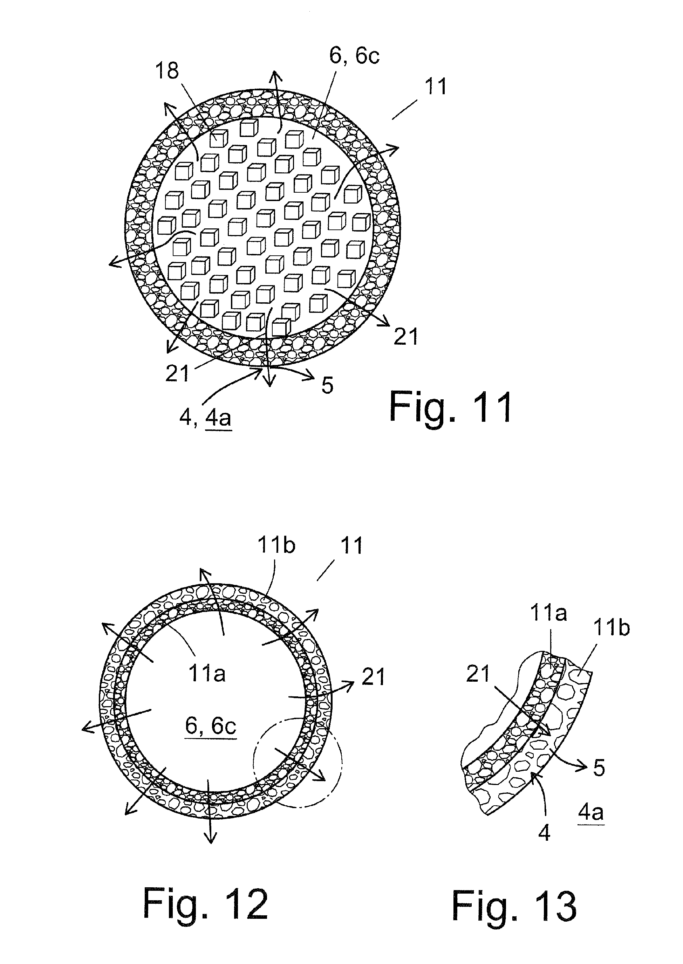

Fig. 11 zeigt den Querschnitt des porösen Rohres 11 aus Fig. 10. Das Brenngas 21 strömt aus dem Katalysatorraum 6 nach außen in den Sauerstoffraum 4a. An der Außenwand des porösen Rohres 11 wird nun das Brenngas 21 vom Sauerstoff 4 oxidiert.

Das Rauchgas 5 vermischt sich hier mit dem Sauerstoff. Wie bei allen Verbrennungsvorgängen, ist es vorteilhaft, mit einem kleinen Sauerstoffüberschuss zu arbeiten. Für die Wärmeübertragung ist es vorteilhaft, wenn das poröse Rohr 11 an der Oxidationszone eine höhere Porosität aufweist.

In Fig. 12 und 13 ist dieses Prinzip bildlich dargestellt. Die unterschiedliche Porosität wird hier durch das Ineinanderstecken eines feinporigen Rohres 11a und eines grobporigen Rohres 11b herbeigeführt. Fig. 13 zeigt einen vergrößerten Ausschnitt aus Fig. 12. Das ausströmende Brenngas 21 trifft schon im Porenraum 11b auf den Sauerstoff 4 und oxidiert das Brenngas zu Rauchgas 5. So werden ähnliche Verhältnisse hergestellt wie in einem Porenbrenner. Die Wärme wird so gut auf das Rohr übertragen und durch Wärmeleitung an die Innenwand transportiert. Das heiße Rohr 11a heizt so den Katalysatorraum 6.

In Fig. 14 ist die Anordnung von Fig. 10 im Querschnitt dargestellt. Natürlich lässt sich der Reaktor auch so betreiben, dass der Katalysatorraum 6 um die Rohere 11 und der Sauerstoffraum 4a in den Rohren 11 angeordnet ist. Dann wäre die Oxidationszone an der Innenwand der Rohre 11. Die Porositäten der Rohre 11a und 11b müssten dann entsprechend getauscht werden.

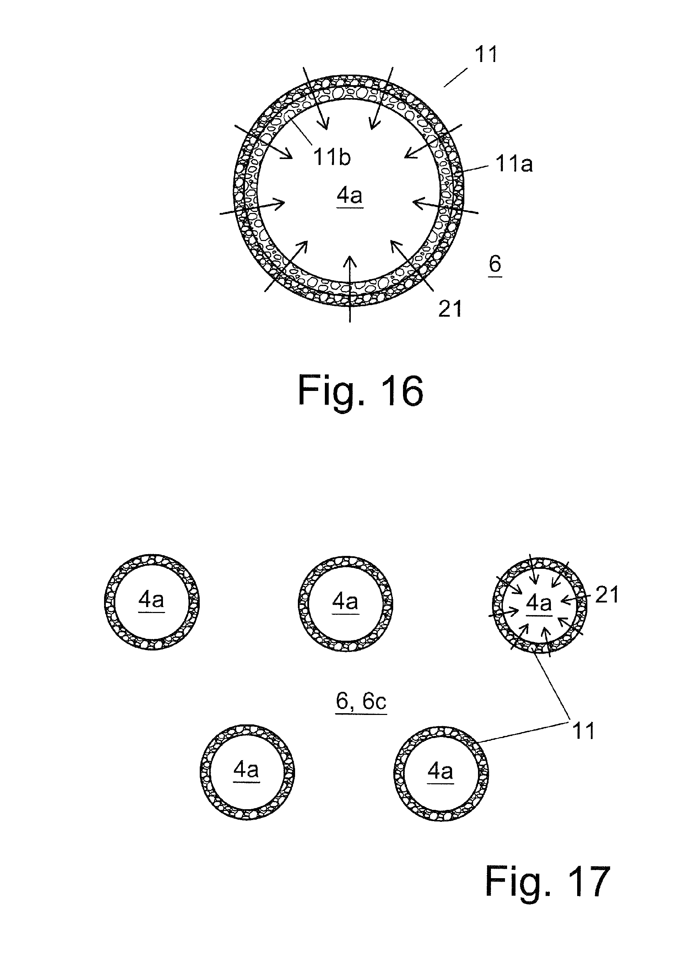

Die Fig. 15 bis 17 zeigen einen solchen Fall. In Fig. 16 befindet sich der Sauerstoffraum 4a und mithin die Oxidationszone in den porösen Rohren 11. Die gröbere Struktur 11b befindet sich an der Innenseite und die feinere Dosier-Struktur 11a an der Außenseite. Das Brenngas 21 strömt vom Katalysatorraum 6, der um die Rohre angeordnet ist, in das Rohrinnere und wird dort unmittelbar an der Innenwand oder in der Innenwand oxidiert. An die Stelle einer gröberen Struktur 11b in Fig. 16 kann die gröbere Struktur auch durch Formgebung unterstützt werden. Ein solcher Fall mit Rippenstruktur ist in Fig. 15 dargestellt. Eine größere Oxidationsfläche ist hier durch eine Rippenstruktur an Rohr 11b geschaffen worden. Zur Erhöhung der Turbulenz können die Rillen auch wendelförmig angeordnet sein. Zur besseren Wärmeübertragung an die Katalysatorpartikel 18 kann eine Rippenstruktur innen und außen an der Rohrwand 11 angeordnet sein.

Fig. 17 zeigt einen Reaktorquerschnitt, bei dem der Katalysatorraum 6 um die porösen Rohre 11 angeordnet ist. Der Katalysatorraum kann als stationäre Wirbelschicht 6a, als zirkulierende Wirbelschicht 6b oder als Festbett 6c gestaltet sein.

### Vorteile

Die Oxidation im Porenraum der Rohrwand ermöglicht eine um Größenordnungen bessere Wärmeübertragung als bei der Wärmeübertragung von Rauchgasen auf eine Rohrwand. Das ergibt auch bei allothermer Betriebsweise ein kleines Reaktorvolumen bei großer Leistung. Der Katalysatorraum kann zudem als Wirbelschicht ausgebildet werden, was die Wärmeübertragung auf die Katalysatorpartikel verbessert und für eine gleichmäßige Temperaturverteilung im Katalysatorbett sorgt. Bei der autothermen Betriebsweise mit reinem Sauerstoff können die Betriebsbedingungen hinsichtlich Temperatur, Verweilzeit, Katalysatorgröße, Katalysatorart und Anordnung gezielt eingestellt werden, weil der Sauerstoff nicht mehr direkt auf die Katalysatorpartikel trifft. Die Oxidation in der porösen Struktur der Rohre hat Ähnlichkeit mit einem Porenbrenner, bei dem die Temperaturen auch deutlich niedriger sind als in einer freien Flamme. Die Temperaturdifferenz zwischen Brennraum in den Poren und den Katalysatorpartikeln ist zudem viel kleiner. Dadurch werden weniger Schadstoffe gebildet.

### Bezugszeichenliste

- 1: Reaktor
- 2: Rohgas
- 3: Synthesegas
- 4: Sauerstoff
- 4a: Sauerstoffraum
- 5: Rauchgas
- 6: Katalysatorraum
- 6a: Stationäre Wirbelschicht
- 6b: Zirkulierende Wirbelschicht
- 6c: Festbett
- 7: Freiraum
- 8: Düsenboden
- 9: Rohrboden unten
- 10: Rohrboden oben
- 11: Gasdurchlässige Wand in Gestalt einer porösen Rohrwand
- 11a: Dosierrohr, feinporige Wand
- 11b: Porenbrennraum, grobporige Wand
- 12: Bodenrohr
- 13: Kopfrohr
- 14: Sammelrohre
- 15: Trennvorrichtung
- 16: Lamellen
- 17: Gasströmung
- 18: Katalysatorpartikel
- 19: Bodenplatte
- 20: Kopfplatte
- 21: Brenngas

## Patentansprüche

1. Vorrichtung zur katalytischen Umsetzung von gasförmigen Kohlenwasserstoffen zu Synthesegas mit Hilfe von Sauerstoff, **dadurch gekennzeichnet, dass** der Gas und Katalysatorpartikel enthaltene Katalysatorraum (6, 6a, 6b, 6c) durch eine gasdurchlässige Wand (11) von dem Sauerstoff enthaltenen Sauerstoffraum (4a) getrennt ist.

2. Vorrichtung nach Anspruch 1, **dadurch gekennzeichnet, dass** die gasdurchlässige Wand (11) von einer Vielzahl von Rohren gebildet wird.

3. Vorrichtung nach Anspruch 1 bis 2, **dadurch gekennzeichnet, dass** die Rohre (11) mehrlagig (11a, 11b) ausgebildet sind.

4. Vorrichtung nach Anspruch 1 bis 3, **dadurch gekennzeichnet, dass** die Rohre (11) in ihrer Längsachse einen unterschiedlichen Durchströmungswiderstand aufweisen.

5. Vorrichtung nach Anspruch 1 bis 4, **dadurch gekennzeichnet, dass** die Rohre eine Rippenstruktur aufweisen.

6. Vorrichtung nach Anspruch 1 bis 5, **dadurch gekennzeichnet, dass** der Katalysatorraum (6, 6a, 6b) um die Rohre (11) angeordnet ist.

7. Vorrichtung nach Anspruch 1 bis 6, **dadurch gekennzeichnet, dass** der Katalysatorraum (6, 6a, 6b) innerhalb der Rohre (11) angeordnet ist.

8. Vorrichtung nach Anspruch 1 bis 7, **dadurch gekennzeichnet, dass** die Katalysatorpartikel (18) als Festbett angeordnet sind.

9. Vorrichtung nach Anspruch 1 bis 8, **dadurch gekennzeichnet, dass** sich die Katalysatorpartikel (18) mindestens teilweise in Schwebe befinden.

10. Vorrichtung nach Anspruch 1 bis 7 und 9, **dadurch gekennzeichnet, dass** am Ende des Katalysatorraumes (6, 6a, 6b)) mindestens eine Trennvorrichtung (15) angeordnet ist.

11. Vorrichtung nach Anspruch 10, **dadurch gekennzeichnet, dass** die Trennvorrichtung (15) als Lamellenabscheider ausgebildet ist.

12. Verfahren zur katalytischen Umsetzung von gasförmigen Kohlenwasserstoffen mit Hilfe von Sauerstoff zu Synthesegas nach einem der Ansprüche 1 bis 11, **dadurch gekennzeichnet, dass** der Differenzdruck zwischen dem gasgefüllten Katalysatorraum (6, 6a, 6b) und dem Sauerstoffraum (4a) so gewählt wird, dass ein Gasaustausch stattfindet.

13. Verfahren nach Anspruch 12, **dadurch gekennzeichnet, dass** der Diffferenzdruck so gewählt wird, dass Gas aus dem Katalysatorraum (6, 6a, 6b) in den Sauerstoffraum (4a) strömt.

14. Verfahren nach Anspruch 12 bis 13, **dadurch gekennzeichnet, dass** der Diffferenzdruck so gewählt wird, dass Sauerstoff in den Katalysatorraum (6, 6a, 6b) strömt.

15. Verfahren nach Anspruch 12 bis 14, **dadurch gekennzeichnet, dass** die Strömungsgeschwindigkeit des Gases im Katalysatorraum (6, 6a, 6b) und Größe der Katalysatorpartikel (18) so gewählt werden, dass ein Festbett entsteht.

16. Verfahren nach Anspruch 12 bis 14, **dadurch gekennzeichnet, dass** Strömungsgeschwindigkeit im Katalysatorraum (6, 6a, 6b) und Größe der Katalysatorpartikel (18) so gewählt werden, dass eine Wirbelschicht entsteht.

17. Verfahren nach Anspruch 12 bis 14 und 16, **dadurch gekennzeichnet, dass** aufgewirbelte Katalysatorpartikel (18) durch eine Trennverrichtung (15) in den Katalysatorraum (6, 6a, 6b) zurückgefördert werden.
